# FASCICULE DE BREVET EUROPEEN

(11) **EP 0 493 283 B1**
(45) Date de publication et mention de la délivrance du brevet: **19.10.1994**
(21) Numéro de dépôt: 91440093.2
(22) Date de dépôt: 14.11.1991
(51) Int. Cl.: A01B 59/048

(54) **Porte-outil adaptable à l'avant d'un tracteur agricole et permettant de travailler la terre latéralement par rapport au dit tracteur**
Werkzeugträger für die Vorderseite des Schleppers zur Bodenbearbeitung entlang den Seiten dieses Schleppers
Tool carrier for front mounting on a tractor allowing ground working on either side of that tractor

(30) Priorité: 20.12.1990 FR 9016391
(43) Date de publication de la demande: 01.07.1992
(73) Titulaire: Bergaut-Menuel, Pierre, F-51290 Somsois (FR)
(72) Inventeur: Bergaut-Menuel, Pierre, F-51290 Somsois (FR)
(74) Mandataire: Mayran, Ninon Avocat

(56) Documents cités:
- EP-A- 0 198 563
- EP-A- 0 256 274
- DE-U- 8 512 263
- FR-A- 2 577 746
- FR-A- 2 646 052
- US-A- 2 600 244

## Description

La présente invention a pour objet un porte-outil selon le préambule de la revendication 1, adaptable à l'avant d'un tracteur agricole, et plus particulièrement un attelage à déport d'outil permettant de travailler la terre sur le côté dudit tracteur. Un tel porte-outil est connu du document FR-A-2646052.

Il est courant de travailler la terre simultanément avec deux outils, l'un traîné derrière le tracteur, l'autre greffé sur le premier mais déporté latéralement par l'intermédiaire d'un bras de liaison.

Ces dispositifs présentent des inconvénients, d'une part de fatigue excessive de l'attelage qui n'est pas prévu pour cet effort supplémentaire, d'autre part de manoeuvrabilité lorsqu'il faut effectuer un demi-tour à l'extrémité du champ.

En effet l'outil déporté doit obligatoirement, puisqu'il est greffé latéralement sur l'outil traîné, être dételé puis attelé de l'autre côté après basculement du bras de liaison. De plus, cet outil utilisé en déport doit être acheminé sur le lieu de travail par un engin tiers étant donné la largeur excessive de l'ensemble, qui lui interdit un déplacement sur route.

On a proposé des dispositifs permettant de résoudre en partie les inconvénients précités, notamment ceux décrits dans les brevets français 2.577.746 et 2.564.690, qui concernent un porte-outil disposé à l'avant d'un tracteur, et d'autre part celui décrit dans le brevet français 2.591.058, qui concerne un outil traîné à l'arrière et sur le côté du tracteur, mais attelé à une traverse fixée à l'avant dudit tracteur. Les deux premiers permettent de manoeuvrer facilement, en revanche ils ne sont pas déportés et travaillent dans l'axe d'avancement du tracteur. Le troisième est déporté sur le côté mais est d'une manoeuvrabilité délicate.

La présente invention permet de remédier à ces inconvénients, en proposant un porte-outil d'une manoeuvrabilité aisée, permettant de travailler latéralement par rapport à un tracteur.

Le porte-outil objet de l'invention s'adapte sur le relevage trois points avant d'un tracteur, comportant à cet effet un bâti de forme triangulaire dont les sommets coincident avec les trois points de relevage, auxquels il est fixé, permettant ainsi des inclinaisons différentes de l'outil. A la base de ce bâti triangulaire est solidarisée une poutre horizontale aux extrémités de laquelle est fixé par ses extrémités un rail en demi-cercle.

Un bras télescopique est monté d'une part pivotant par une de ses extrémités autour d'un axe vertical fixé sous la poutre horizontale en son milieu, et d'autre part coulissant sur le rail.

A l'extrémité dudit bras télescopique est reliée, par l'intermédiaire d'une rotule, l'extrémité d'un bras à l'autre extrémité duquel peut être adapté un outil, par exemple un brise-mottes.

Ainsi le bras télescopique peut se déplacer en pivotant autour de l'axe vertical et se positionner parallèlement à la poutre, soit à droite soit à gauche du tracteur, et cela sous l'effet d'une simple manoeuvre, sans que le conducteur ait à intervenir directement.

Lorsque le travail est terminé, il suffit d'amener l'outil sous la poutre horizontale, les bras se superposant dans l'axe du tracteur, d'agripper l'outil à l'aide de crochets fixés sous la poutre horizontale, et de relever l'ensemble, le tout pouvant s'effectuer sans descendre du tracteur, par manoeuvres successives, en faisant appel à la possibilité d'allongement et de raccourcissement du bras télescopique, et en se servant du relevage trois points.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue en perspective du porte-outil selon l'invention.
- les figures 2a à 2f représentent en vue schématique la manoeuvre de demi-tour d'un tracteur équipé d'un porte-outil selon l'invention.
- le figure 3 représente schématiquement la position de l'outil lorsque le tracteur se déplace sur route.

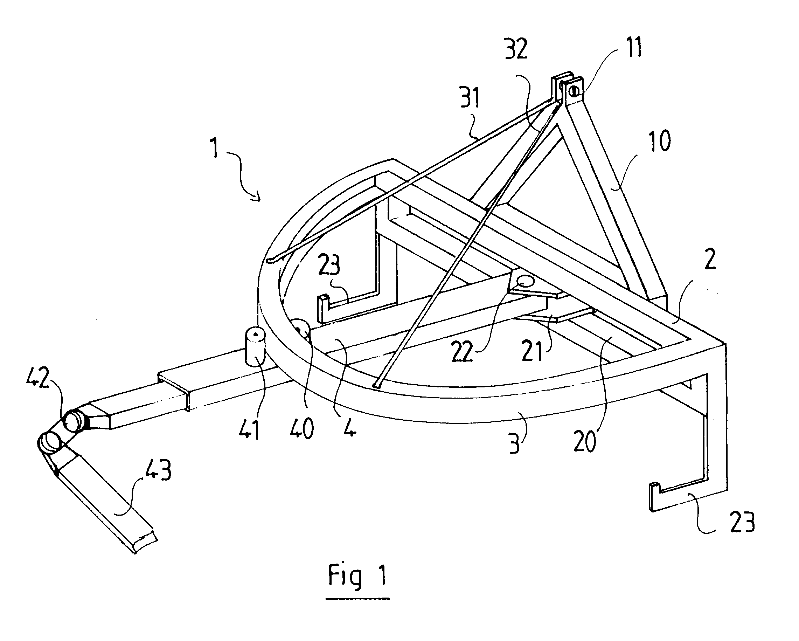

Si on se réfère à la figure 1 on peut voir que le porte-outil 1 selon l'invention comporte un bâti 10 de forme triangulaire permettant l'assemblage dudit porte-outil 1 au relevage trois points avant d'un tracteur, le sommet du bâti 10 comportant notamment un orifice 11 permettant sa fixation au point haut mobile dudit relevage.

A la base du bâti 10 est fixée une poutre horizontale 2, aux extrémités de laquelle est fixée par ses extrémités un rail 3 en demi-cercle, des tirants 31 et 32 reliant ledit rail 3 au sommet du bâti 10.

A la face intérieure de la poutre horizontale 2 et en son milieu est fixé, entre elle et une deuxième poutre 20 parallèle à la poutre 2, un palier 21 muni d'un axe vertical 22 gai traverse l'extrémité d'un bras télescopique horizontal 4, lequel coulisse sous le rail 3, auquel il est relié par deux galets disposés à sa face supérieure, un galet 40 roulant dans le rail et un galet 41 roulant sur le rail.

A l'autre extrémité du bras télescopique 4 est assemblé, au moyen d'une articulation 42, un bras 43 au bout duquel est fixé l'outil.

A chaque extrémité inférieure de la poutre horizontale 20 est fixé an crochet 23 permettant d'accrocher l'outil en vue d'en effectuer le transport sur le lieu de travail.

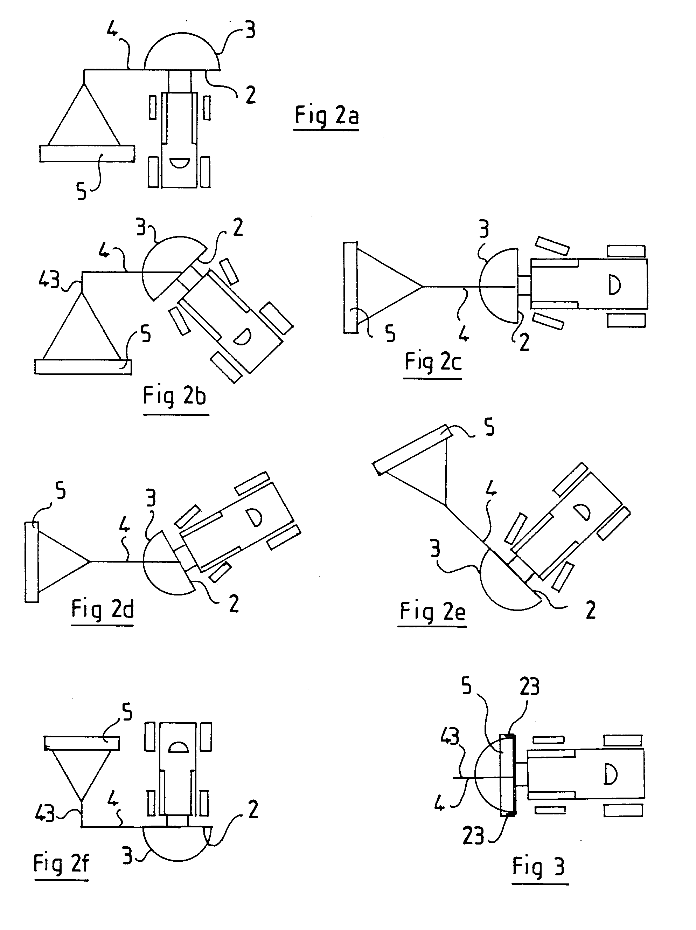

Si on se réfère aux figures 2a à 2f, on peut voir que la manoeuvre du demi-tour à l'extrémité d'un champ peut s'effectuer sans dételer l'outil 5.

La figure 3 montre la position de l'outil, lorsque le tracteur est sur une route, les bras 4 et 43 étant dans l'axe du tracteur et l'outil 5 fixé aux crochets 23.

## Revendications

1. Porte-outil adaptable à l'avant d'un tracteur agricole et permettant de travailler la terre latéralement par rapport audit tracteur, apte à être fixe sur le relevage trois points avant du tracteur, par l'intermédiaire de son bâti (10), caractérisé en ce que le bâti (10) est de forme triangulaire et solidarisé par sa base à une poutre horizontale (2) aux deux extrémités de laquelle est fixé par ses extrémités un rail (3) en demi-cercle sur lequel coulisse un bras télescopique (4) dont une des extrémités est montée pivotant autour d'un axe (22) vertical fixé au milieu et en-dessous de ladite poutre horizontale (2), et dont l'autre extrémité est solidarisée, par l'intermédiaire d'une articulation (41), à un bras (43) au bout duquel est fixé l'outil (5).

2. Porte-outil selon la revendication 1, caractérisé en ce que le bras télescopique (4) coulisse sur le rail (3) en demi-cercle grâce à deux galets qui lui sont solidaires à sa face supérieure, un galet (40) roulant sur la face du rail (3) côté poutre et un galet (41) roulant sur la face opposée du rail (3) côté extérieur.

3. Porte-outil selon la revendication 1 ou la revendication 2, caractérisé en ce que l'outil (5) peut être fixé en vue de son transport à des crochets (23) fixés sous la poutre horizontale (2).

## Claims

1. Tool carrier for front mounting on a tractor allowing ground working on either side of the tractor capable of being attached on the three mounting points on the front of the tractor by means of its frame (10), characterised in that the frame (10) is of triangular form and is connected by its base to a horizontal beam (2) at two ends of which a semi circular rail (3) is attached by its ends and upon which a telescopic arm (4) slides, of whose one end is pivotally mounted around a vertically fixed axis (22) in the centre of and underneath the said horizontal beam (2) and of whose other end is connected by means of a joint (41) to an arm (43) to the end of which is fixed the tool (5).

2. Tool carrier according to claim 1 characterised in that the telescopic arm (4) slides on the rail (3) in a semi circle by means of two runners which are fixed to it on its upper face, one roller (40) rolling on the beam side face of the rail (3) and one roller (41) rolling on the opposite exterior side face of the rail (3).

3. Tool carrier according to claim 1 or claim 2, characterised in that the tool (5) may be attached with a view to its transportation by hooks (23) fixed on the horizontal beam (2).

## Patentansprüche

1. Werkzeugträger für die Vorderseite eines Schleppers zur Bodenbearbeitung entlang der Seiten dieses Schleppers, wobei der Werkzeugträger auf dem Dreipunkthebewerk vor dem Schlepper über seinen Rahmen (10) fixierbar ist, **dadurch gekennzeichnet**, daß der Rahmen (10) dreieckig und an seiner Basis mit einem horizontalen Träger (2) verbunden ist, mit dessen beiden Enden die Enden einer halbkreisförmigen Schiene (3) verbunden sind, auf welcher ein Teleskoparm (4) geführt ist, dessen eines Ende schwenkbar um eine vertikal in der Mitte und unterhalb des horizontalen Trägers (2) fixierte Achse (22) gelagert ist und dessen anderes Ende über eine Gelenkverbindung (42) mit einem Arm (43) verbunden ist, an welchem das Werkzeug (5) befestigt ist.

2. Werkzeugträger nach Anspruch 1, **dadurch gekennzeichnet**, daß der Teleskoparm (4) mit Hilfe von zwei auf seiner Oberseite befestigten Rollen halbkreisförmig an der Schiene (3) geführt ist, wobei eine Rolle (40) auf der dem Träger zugewandten Oberfläche der Schiene (3) abrollt und die andere Rolle (41) auf der gegenüberliegenden Außenseite der Schiene (3) abrollt.

3. Werkzeugträger nach einem der Ansprüche 1 oder 2, **dadurch gekennzeichnet**, daß das Werkzeug (5) zum Zwecke seines Transports an auf dem horizontalen Träger (2) fixierten Haken (23) befestigbar ist.
